# FASCICULE DE BREVET EUROPEEN

(11) **EP 4 313 888 B1**
(45) Date de publication et mention de la délivrance du brevet: **27.11.2024**
(21) Numéro de dépôt: 22717231.9
(22) Date de dépôt: 28.03.2022
(51) Int. Cl.: C03B 33/02, B23K 26/0622, B23K 26/53, C03B 33/037, C03B 33/04, C03B 33/07, B23K 26/00, B23K 26/03, B23K 26/38, B23K 103/00

(54) **PROCEDE DE DECOUPE D'UN VITRAGE FEUILLETE AU MOYEN D'UNE SOURCE LASER**
VERFAHREN ZUM SCHNEIDEN EINER VERBUNDGLASSCHEIBE MITTELS EINER LASERQUELLE
METHOD FOR CUTTING A LAMINATED GLASS PANE BY MEANS OF A LASER SOURCE

(30) Priorité: 02.04.2021 FR 2103461
(43) Date de publication de la demande: 07.02.2024
(73) Titulaire: Saint-Gobain Glass France, 92400 Courbevoie (FR)
(72) Inventeur: RAPENNE, Thibault, 60400 NOYON (FR); FESSEMAZ, Alexandre, 52064 AACHEN (DE); NIELSEN, Tobias, 50670 KOLN (DE)
(74) Mandataire: Saint-Gobain Recherche
(86) Numéro de dépôt international: PCT/FR2022/050566
(87) Numéro de publication internationale: WO 2022/208008

(56) Documents cités:
- US-A1- 2018 118 603

## Description

L'invention concerne un procédé de découpe d'un vitrage feuilleté, notamment pour un véhicule automobile.

Dans le domaine des vitrages automobiles notamment, il existe un besoin constant de pouvoir réaliser un ou des trous à travers un vitrage, typiquement obtenu par perçage du verre, besoin pour lequel la réalisation diffère toutefois selon qu'il s'agit d'un vitrage monolithique ou d'un vitrage feuilleté.

On rappelle qu'un vitrage monolithique comporte une unique feuille de verre, ladite feuille étant par exemple chauffée à une température de l'ordre de 650°C puis refroidie brutalement avec de l'air afin de la tremper, c'est-à-dire la renforcer thermiquement, et cela tout en leur donnant généralement la forme souhaitée.

Par comparaison avec un tel vitrage monolithique, un vitrage feuilleté comporte une feuille de verre extérieure et une feuille de verre intérieure qui sont assemblées par un intercalaire comportant au moins une feuille en matériau polymère, telle qu'au moins une feuille de polyvinylbutyral (PVB).

Si le perçage de trou(s) dans un vitrage monolithique ne pose pas de problème technique particulier tel n'est en revanche pas le cas des vitrages feuilletés et ce alors que leur utilisation est en constante augmentation.

En effet, les constructeurs automobiles souhaitent, notamment pour certains véhicules de leur gamme, disposer de vitrages offrant les meilleures propriétés existantes telles qu'en particulier des qualités d'atténuation acoustique, de résistance contre les effractions, des propriétés athermiques notamment par rapport aux rayonnements solaires (UV), etc.

C'est l'une des raisons pour lesquelles, on recherche de plus en plus à utiliser des vitrages feuilletés dans un véhicule automobile, notamment mais non exclusivement pour les vitrages latéraux.

Bien qu'il soit plus particulièrement pris comme exemple d'application ci-après, le cas des vitrages latéraux n'est toutefois nullement limitatif par rapport à d'autres types de vitrage tel qu'un pare-brise, une lunette arrière ou encore un vitrage de toit.

Par rapport aux vitrages monolithiques, les vitrages feuilletés permettent en outre d'améliorer le confort acoustique grâce aux propriétés d'absorption de l'intercalaire comportant au moins une feuille en matériau polymère, tel que du polyvinylbutyral (PVB), et d'offrir également une meilleure résistance à l'effraction, de nouvelles propriétés comme le blocage des rayonnements UV provenant du soleil.

Néanmoins, il existe techniquement des différences importantes entre un vitrage monolithique et un vitrage feuilleté qui font que l'utilisation de tels vitrages feuilletés n'est pas sans poser des problèmes et qui, pour certaines, ont des conséquences sur les solutions techniques susceptibles d'être mises en oeuvre pour y réaliser des trous.

L'une des différences est notamment le comportement mécanique tel que la résistance, un vitrage feuilleté ne présentant pas des caractéristiques qui soient équivalentes à celles d'un vitrage monolithique. En effet, les feuilles de verre constitutives du vitrage feuilleté n'atteignent pas les niveaux de contraintes des vitrages monolithiques, en raison notamment de leur moindre épaisseur qui ne permet pas de créer, lors du refroidissement, un gradient thermique suffisant qui soit à même de générer des contraintes nécessaires à l'obtention d'une résistance mécanique équivalente, notamment à la flexion.

C'est la raison pour laquelle, de tels vitrages feuilletés sont encore généralement désignés par les termes durcis ou semi-trempés par opposition à la désignation de trempés couramment utilisée pour les vitrages monolithiques.

L'utilisation d'un vitrage feuilleté en tant que vitrage latéral par exemple ne pose pas de problème de sécurité en soit dès lors que la feuille en matériau polymère de l'intercalaire assure la cohésion de l'ensemble en cas d'accident et évite ainsi la projection de morceaux de verre susceptibles de provoquer des blessures. Par comparaison avec un vitrage monolithique, l'obtention d'une fragmentation dite « securit » n'est donc pas nécessaire.

En revanche, outre leurs caractéristiques de comportement mécanique, les vitrages feuilletés se distinguent aussi des vitrages monolithiques en ce qui concerne la possibilité d'y percer des trous.

Dans le cas d'un vitrage latéral, il s'agit d'un ou plusieurs trous destinés à être traversés par des moyens de fixation pour assurer la liaison du vitrage avec un dispositif d'entraînement logé dans la portière.

Un vitrage latéral comportant de tels trous de fixation permet d'utiliser les mêmes moyens de fixation que ceux utilisés pour un vitrage monolithique au bénéfice notamment d'une standardisation des moyens de fixation et surtout d'une interchangeabilité entre les deux types de vitrages sur un même véhicule.

A défaut de trous de fixation, il est connu de relier un vitrage latéral de type feuilleté au dispositif d'entraînement par l'intermédiaire de moyens de fixation (encore appelé « holder ») qui sont selon un premier type de liaison fixés au vitrage par collage ou qui sont, selon un deuxième type de liaison, fixés par serrage (ou pincement), généralement au moyen de deux pièces disposées de part et d'autre du vitrage et montées serrées par vissage.

Outre des inconvénients propres à chacun, ces deux types de liaison ne permettent en particulier pas une interchangeabilité entre deux vitrages respectivement monolithique et feuilleté.

Dans le cas des autres types de vitrage, une lunette arrière doit par exemple présenter un trou pour permettre le passage de l'axe de l'essuie-glace de même qu'un vitrage de toit en présentera au moins un pour le montage d'une antenne ou encore de barres de toit. Ainsi, le besoin de faire des trous dans le verre n'est nullement limité à la fixation des vitrages latéraux mais concerne au contraire plus généralement les différents vitrages feuilletés susceptibles d'être montés sur un véhicule automobile.

Par rapport aux vitrages monolithiques, on distingue principalement deux possibilités pour réaliser un trou dans un vitrage feuilleté, en particulier pour obtenir un trou traversant

La première possibilité consiste à réaliser un perçage dans chacune des feuilles de verre avant l'assemblage du vitrage tandis que la seconde possibilité consiste à réaliser un perçage après l'assemblage du vitrage, c'est-à-dire lorsque les deux feuilles de verre sont liées entre elles par l'intercalaire.

Si un perçage avant l'assemblage du vitrage est couramment utilisé, en particulier dans chacune des feuilles de verre pour obtenir un trou traversant par exemple destiné à la fixation dans le cas d'un vitrage latéral, cette première possibilité n'est toutefois pas sans poser différents problèmes.

Un premier problème lorsque le trou est traversant est celui du désalignement (ou décalage) entre les trous des deux feuilles de verre en raison notamment des rayons de courbure différents entre les faces interne et externe des feuilles de verre. Le désalignement (encore appelé « mismatch » en anglais) aboutit au fait que les trous réalisés dans chacune des feuilles de verre du vitrage ne se trouvent ensuite pas correctement alignés l'un avec l'autre après l'assemblage du vitrage.

Un tel désalignement ne permet en outre pas une bonne reprise des efforts par chacune des deux feuilles de verre, en y générant une sollicitation plus importante le risque de casse s'en trouve aggravé, en particulier lors d'un contact entre une pièce mécanique passant à travers le trou et le bord de ce dernier.

Par ailleurs, un tel désalignement n'est pas esthétique, posant surtout un problème lorsque le bord de trou est apparent, mais il se traduit également parfois par une difficulté à intégrer une pièce mécanique dont les tolérances d'ajustement sont inférieures au décalage entre les deux feuilles de verre.

Les inconvénients ne se limitent cependant pas aux conséquences sur le vitrage feuilleté obtenu dès lors que la fabrication du vitrage s'en trouve également impactée. En effet, le centrage des deux feuilles de verre doit se faire de manière plus méticuleuse, de manière à minimiser autant que possible le désalignement entre les trous des feuilles de verres, ce qui se traduit alors par un ralentissement des cadences de fabrication.

D'une manière générale, la manipulation de l'intercalaire pour le disposer entre les deux feuilles de verre est rendue plus complexe et cela qu'un trou ait été réalisé dans l'intercalaire avant l'assemblage, nécessitant alors de veiller à aligner au mieux l'ensemble des trous, ou encore que le trou y soit réalisé après en veillant alors à ne pas abîmer les trous ménagés dans les feuilles de verre en passant avec l'outil de coupe, ni à laisser de surplus de matériau polymère.

En l'absence d'un tel trou dans l'intercalaire avant l'assemblage, un autre problème est alors rencontré en raison d'un fluage du matériau polymère de l'intercalaire dans les trous lors de l'autoclavage, de sorte que cela nécessite ensuite des opérations fastidieuses de finition pour l'éliminer.

Enfin, il est difficile en présence de trou dans les feuilles de verre d'obtenir un bon dégazage (ou désaérage) lors de l'assemblage du vitrage feuilleté. C'est la raison pour laquelle, les trous sont généralement bouchés momentanément, par exemple en collant une feuille d'aluminium adhésive de manière à éviter toute infiltration d'air par le bord de trou lors du dégazage.

Ceci rajoute donc deux opérations supplémentaires, à savoir la mise en place de l'adhésif puis le retrait de cet adhésif après l'assemblage du vitrage, c'est à dire après un calandrage, une mise sous vide par joint périphérique ou par sac à vide, puis un passage à haute température (entre 80 et 120°C) ou bien après l'opération d'autoclavage.

A tout le moins la première possibilité consistant à percer le verre avant l'assemblage du vitrage nécessite donc au moins une opération de perçage supplémentaire (une pour chaque feuille de verre) par rapport à la deuxième possibilité consistant à réaliser un perçage après l'assemblage du vitrage feuilleté.

Au-delà des nombreux inconvénients précités, il existe un problème additionnel à vouloir percer chaque feuille de verre d'un vitrage feuilleté avant l'assemblage car le perçage est généralement réalisé avant sa mise en forme, avant de réaliser un renforcement du verre. En effet, l'épaisseur des feuilles de verre d'un vitrage feuilleté est moindre que celle d'un vitrage monolithique, de sorte que le perçage dans un verre plat, soit en 2D, non renforcé s'avère techniquement délicat et donne lieu à des pertes de rendement.

Ainsi, il est généralement difficile de percer des trous de diamètre supérieur à 40 mm dans une feuille de verre ayant une épaisseur de 2.1 mm et d'un diamètre supérieur à 16 mm pour des feuilles de verre de 1.6 mm d'épaisseur.

La deuxième possibilité consistant à réaliser le perçage après l'assemblage du vitrage feuilleté présente aussi différents inconvénients.

Par comparaison à un perçage réalisé avant l'assemblage, le perçage d'un vitrage feuilleté implique de percer des feuilles de verre ayant généralement subies un renforcement, généralement une trempe chimique ou thermique.

Par ailleurs, le perçage est alors réalisé sur un vitrage feuilleté présentant sa forme finale, soit généralement un verre bombé (en trois dimensions ou « 3D ») par opposition à une feuille de verre plan (en « 2D ») lorsque le perçage est réalisé avant l'assemblage.

Par conséquent, le perçage du vitrage feuilleté après assemblage s'avère plus complexe à mettre en oeuvre, notamment pour garantir la géométrie du trou, en particulier lorsque le vitrage est bombé, présentant par exemple une forme torique.

Par ailleurs, le perçage mécanique conventionnel du verre présente en tant que tel différents inconvénients. L'un des inconvénients est la qualité de découpe qui est déterminée par l'outillage, par exemple des forets diamantés. En effet, ces forets créent de micro-défauts sur la surface découpée du trou, engendrant des points à partir desquels des fissures peuvent se propager sous certaines sollicitations.

Le risque de propagation de fissures est particulièrement sensible dans le cas des vitrages latéraux comportant des trous de fixation car les vitrages sont soumis à des chocs répétés, en particulier lors des claquages de portière. Ces sollicitations peuvent ainsi engendrer une propagation de fissure partant d'un défaut de découpe tel que des microfissures ou des écailles.

De plus, l'outillage de perçage comme les forets sont sujets à l'usure, engendrant également des performances dégradées au fur et à mesure des perçages, et nécessitant des réaffutages voire un changement de forets pour conserver une qualité de découpe au niveau requis.

Dans le cas d'un vitrage feuilleté, le perçage peut être réalisé sans casse, mais la résistance mécanique du verre va s'en trouver affaiblie. Cela s'explique par la présence de contraintes d'extension dans le verre qui existent dans le plan médian de chaque feuille de verre du vitrage et qui proviennent du refroidissement du verre à partir des deux suifaces de chaque feuille.

Lorsqu'un trou est réalisé, ces contraintes d'extension se modifient et diminuent mais, une extension résiduelle persiste en bord du trou qui devient alors un point d'extrême fragilité pour le verre, ladite extension résiduelle ayant par exemple une valeur moitié moindre de celle présente avant perçage.

Pour remédier à ce problème, il a été proposé de générer préalablement au perçage des contraintes de compression dans la zone à découper en réalisant localement un refroidissement par contact grâce à un outil de refroidissement local, par exemple un outil de forme annulaire et dont l'intérieur est refroidi à l'air afin d'éviter qu'il ne monte en température au contact répété du verre chaud.

On pourra par exemple se reporter aux documents WO-2013/054059 ou WO-2014/057200 pour de plus amples détails sur des exemples de mise en oeuvre de cette solution.

Toutefois, un tel refroidissement local du verre nécessite que le verre soit arrêté pour appliquer localement l'outil de refroidissement quelques secondes au contact de la surface du verre afin de modifier le gradient thermique dans l'épaisseur du verre.

Par conséquent, une telle solution ne peut être mise en oeuvre lorsque le procédé de fabrication est un processus continu au cours duquel la feuille de verre n'est jamais arrêtée ce qui est typiquement le cas du procédé de fabrication dit « BT » acronyme pour « Bombage Transverse », lequel procédé est tout particulièrement utilisé pour la fabrication des vitrages latéraux.

Pour de plus amples détails sur le procédé de fabrication « BT » comme l'installation, on pourra par exemple se reporter aux documents suivants FR2204992 ; FR2642419, FR2549465, et FR2862056 dans lesquels a été décrit ce procédé de fabrication et plus particulièrement l'outillage de bombage des feuilles de verre, notamment les rouleaux formant un tel outillage.

Si la réalisation d'un trou dans un vitrage feuilleté mettant uniquement en oeuvre un perçage mécanique est envisageable, avantageusement après un refroidissement local du verre dans la zone à percer, une autre solution combinant un tel perçage mécanique avec l'utilisation d'une source laser a également été proposée.

Le document CN 104326649 A divulgue un procédé de découpe de trous dans un verre feuilleté comprenant une couche intermédiaire présentant une dureté faible, une feuille de verre supérieure et une feuille de verre inférieure. US2018118603 A1 divulgue un appareil et un procédé de découpe laser de verre feuilleté.

Les feuilles de verre sont trempées et présentent une dureté élevée par rapport à la dureté de la couche intermédiaire. Il est proposé de réaliser une première amorce de découpe au moyen d'un faisceau laser sur la surface de la feuille de verre supérieure et ensuite sur la surface de la feuille de verre inférieure de manière à former, respectivement, une première rainure et une seconde rainure. Lorsque les rainures sont réalisées, une opération de fraisage est exécutée de manière à obtenir un trou traversant le verre feuilleté.

Tel que rappelé précédemment, un vitrage feuilleté comporte un intercalaire en matériau polymère compris entre une première feuille de verre et une deuxième feuille de verre, l'intercalaire comportant généralement du polyvinylbutyral, plus connu sous l'acronyme PVB.

Or, le polyvinylbutyral produit, lors d'un chauffage entraînant sa combustion, un dégagement gazeux d'agents chimiques dits « CMR », acronyme signifiant « Cancérogène Mutagène Reprotoxique ».

Ainsi, la découpe du polyvinylbutyral au moyen d'une source laser n'est pas possible car cela engendrerait forcément la combustion du matériau polymère et, par voie de conséquence, des dégagements gazeux nocifs. Pour des raisons évidentes de sécurité et de préservation de la santé des opérateurs, l'Homme du métier sait donc qu'une source laser ne peut pas être utilisée pour percer un vitrage feuilleté.

Selon cet état de la technique, le procédé met donc en oeuvre une source laser, lors d'une première étape, uniquement pour réaliser une amorce de découpe du verre au moyen de la source laser et, lors d'une deuxième étape, un enlèvement du verre et du polyvinylbutyral est obtenu par un perçage mécanique grâce à quoi on supprime tout risque de dégagement gazeux nocif.

Un tel procédé est donc particulièrement coûteux à mettre en oeuvre car il requiert d'avoir des moyens de production supplémentaires, à savoir d'une part une source laser et, d'autre part, des moyens de perçage mécanique.

La mise en oeuvre d'un tel procédé demande également plus de temps ce qui n'est pas compatible avec les cadences souhaitées de production industrielle.

Par ailleurs, les inconvénients précités liés au perçage mécanique réalisé lors de cette deuxième étape demeurent, notamment la sensibilité à l'usure et la qualité de découpe obtenues avec les risques de fissure en résultant.

De plus, la forme géométrique du trou reste limitée par l'outillage utilisé pour le perçage, c'est-à-dire limité à une forme circulaire.

Par conséquent, il ressort de ce qui vient d'être exposé qu'aucune des solutions de l'art antérieur ne donne aujourd'hui satisfaction et cela que le perçage du verre soit réalisé avant l'assemblage du vitrage feuilleté ou après l'assemblage du vitrage feuilleté.

Le but de l'invention est donc notamment de pallier les inconvénients de l'art antérieur en proposant un procédé de découpe d'un vitrage feuilleté, au moyen d'une source laser, fiable et plus rapide à exécuter que les procédés proposés par l'art antérieur.

Dans ce but, l'invention propose un procédé de découpe d'un vitrage feuilleté, notamment pour un véhicule automobile, comportant au moins une première feuille de verre, une deuxième feuille de verre assemblées par un intercalaire comportant au moins une feuille en matériau polymère, ledit vitrage comportant en outre un insert présentant un trou délimité par un contour intérieur, ledit insert étant logé dans un évidement ménagé dans ledit intercalaire, ledit procédé comportant les étapes suivantes :
- une étape de détection au moyen d'un dispositif de vision dudit contour intérieur ;
- une étape de calcul d'un trajet de découpe à parcourir en fonction de la détection dudit contour intérieur ;
- une étape de découpe au moyen d'une source laser présentant un faisceau de ladite première feuille de verre en fonction dudit trajet de découpe calculé.

Avantageusement, le procédé selon l'invention propose de réaliser au moins une découpe dans un vitrage feuilleté, c'est-à-dire un vitrage feuilleté tel qu'obtenu après l'assemblage de la première feuille de verre et de la deuxième feuille de verre par l'intermédiaire de l'intercalaire, un tel vitrage feuilleté formant alors un ensemble unitaire dont les feuilles de verres sont solidaires.

De préférence, le vitrage feuilleté est un vitrage automobile tel qu'un vitrage latéral destiné à être monté coulissant dans une portière d'un véhicule automobile. Ainsi, la découpe réalisée dans le vitrage feuilleté est par exemple au moins un trou, tel qu'un trou de fixation dans le cas d'un vitrage latéral.

Un tel vitrage latéral ne constitue toutefois qu'un exemple non limitatif de vitrage automobile dans lequel on cherche à faire une découpe, notamment mais non exclusivement un trou. Bien que cela puisse varier selon le véhicule, un vitrage latéral comporte généralement deux trous de fixation et un véhicule ayant usuellement quatre vitres latérales cela en fait un exemple d'application particulièrement intéressant du procédé de découpe selon l'invention.

Selon un autre exemple d'application, le vitrage feuilleté pourrait également être une lunette arrière de véhicule dans laquelle le trou est destiné à permettre le montage d'un essuie-glace, généralement pour le passage de l'axe de l'essuie-glace relié à des moyens d'entraînement.

Selon un encore autre exemple d'application, le vitrage feuilleté pourrait être un toit (ou pavillon) dans lequel la ou les découpes sont destinés au montage d'une antenne ou encore de barres de toit.

Avantageusement, le verre du vitrage feuilleté est découpé après avoir été assemblé et non avant l'assemblage, c'est-à-dire à l'état de produit quasi fini, notamment dans ces exemples de vitrage automobile.

Ainsi, avant l'étape de détection du procédé, on réalise l'assemblage dudit vitrage feuilleté, par exemple une étape de serrage dudit vitrage au moyen de dispositifs de maintien, tels que des pinces, ou une étape de calandrage et généralement une étape de passage en autoclave.

Avantageusement, le procédé de découpe selon l'invention permet de réaliser la ou les découpes dans le vitrage feuilleté avec une totale liberté quant à la forme de la découpe, laquelle forme peut en outre être circulaire, typiquement un trou, mais bien entendu être aussi non-circulaire.

Avantageusement, le procédé de découpe selon l'invention permet de réaliser au moins une découpe dans le vitrage feuilleté avec une très grande précision. Le procédé selon l'invention permet en particulier d'obtenir une excellente coaxialité, grâce à l'insert percé par exemple d'un trou et la précision du laser, et cela quelle que soit la découpe réalisée dans le vitrage feuilleté, notamment un trou borgne ou un trou débouchant.

La précision de découpe tout comme la coaxialité, par exemple du ou des trous de fixation pour un vitrage latéral, sont particulièrement déterminantes pour la qualité du vitrage feuilleté dès lors qu'elles contribuent à réduire fortement les risques de casse dans la zone du vitrage comportant la découpe, notamment dus à la présence de microfissures dans le verre résultant de ladite découpe.

Par comparaison avec l'art antérieur, on remédie en outre aux défauts de coaxialité rencontrés jusqu'alors, notamment dans le cas d'un vitrage latéral, et cela que le perçage des feuilles de verre soit réalisé avant l'assemblage du vitrage feuilleté avec ensuite un problème de désalignement (ou « mismatch ») survenant lors de l'assemblage ou encore lorsque le perçage de chaque feuille de verre soit réalisé après l'assemblage car le problème de désalignement entre les axes des trous réalisés dans chacune des feuilles demeure alors entier et se cumule avec les incertitudes de précision d'un perçage mécanique.

Selon une caractéristique particulièrement avantageuse, l'insert dans le vitrage feuilleté n'est pas visible et cela quel que soit le vitrage automobile. Dans le cas d'un vitrage latéral, la partie comportant les trous de fixation se situe à l'intérieur de la portière (soit en dessous de la limite de visibilité du vitrage) et n'est donc jamais visible. Toutefois, dans le cas d'un toit ou d'une lunette arrière, l'insert peut également être invisible du fait par exemple qu'il soit recouvert par un élément rapporté comme l'antenne ou une partie de l'essuie-glace ou encore masqué par une couche d'émail du vitrage.

Selon une caractéristique importante, l'insert est logé dans un évidement (ou une découpe) ménagé dans l'intercalaire grâce à quoi aucun matériau polymère n'est présent autour du trou de l'insert, soit au moins dans la partie du vitrage dans laquelle est réalisée la découpe de sorte que le risque de dégagement gazeux d'agents chimiques CRM est totalement supprimé.

Ainsi, l'invention va à l'encontre des préjugés techniques de l'Homme du métier pour lequel la présence de l'intercalaire en matériau polymère exclut l'utilisation d'une source laser, en particulier pour réaliser un trou débouchant à travers un vitrage feuilleté.

Avantageusement, la découpe réalisée au moyen d'une source laser conformément à l'invention garantit une constance de qualité de coupe lors de la fabrication des vitrages feuilletés, par comparaison notamment à un perçage mécanique la qualité de coupe avec un laser n'est pas impactée dans le temps par une usure comme l'est un outillage.

De plus, le procédé de découpe par laser permet d'obtenir des bords de coupe nette, avec peu de débris et qui ne nécessitent en outre pas ultérieurement une étape de polissage telle qu'usuellement mise en oeuvre après un perçage mécanique.

Par comparaison avec un perçage mécanique, la découpe par laser est réalisée à distance, « sans contact » dès lors que seul le faisceau émis par la source laser entre en contact avec la feuille de verre.

Avantageusement, le procédé de découpe laser selon l'invention permet une perte minimale de matière par rapport à un perçage mécanique, par exemple avec un foret diamanté dont la largeur de coupe est proche de 1 mm.

Avantageusement, la source laser utilisée lors de l'étape de découpe du procédé selon l'invention est également susceptible d'être utilisée pour réaliser d'autres opérations telles qu'un chanfreinage ou encore une ablation d'un revêtement (ou une peinture) sur le vitrage feuilleté.

Ainsi, on améliore en outre les coûts de fabrication en utilisant la source laser pour effectuer différentes opérations et non pas uniquement la découpe.

Avantageusement, la puissance de la source laser est apte à être réglée en fonction de l'opération, par exemple à faible puissance pour une ablation, puis à plus forte puissance pour une découpe.

De préférence, lors de l'étape de calcul, on calcule un retrait par rapport audit contour intérieur compris entre 0,1 mm et 1 mm, voire entre 0,5 mm et 1 mm de sorte que ledit faisceau n'atteigne pas l'insert lors de l'étape de découpe.

Avantageusement, lors de l'étape de découpe ladite seconde feuille de verre est également découpée en fonction dudit trajet de découpe calculé au moyen de ladite source laser.

De préférence, le procédé de découpe comporte en outre une étape de chanfreinage au moyen de ladite source laser consistant à réaliser au moins un chanfrein sur un bord d'un trou de ladite première feuille de verre résultant de l'étape de découpe.

De préférence, le procédé de découpe comporte en outre une étape de chanfreinage au moyen de ladite source laser d'au moins un chanfrein sur un bord de ladite première feuille de verre et/ou sur un bord de ladite seconde feuille de verre d'un trou débouchant résultant de l'étape de découpe.

Avantageusement, l'étape de chanfreinage et l'étape de découpe sont réalisées avec une même source laser, grâce à quoi on réduit notamment les coûts et le temps de fabrication par rapport à l'art antérieur dans lequel chacune de ces étapes serait réalisée avec un outillage différent.

Avantageusement, le chanfreinage du bord d'une découpe telle qu'un trou réalisé dans au moins l'une des feuilles de verre suivant le procédé de l'invention permet de réduire les risques de casse.

De préférence, le procédé comporte en outre une étape de découpe additionnelle de ladite deuxième feuille de verre au moyen d'une source laser additionnelle présentant un faisceau en fonction dudit trajet de découpe calculé.

De préférence, l'étape de découpe et l'étape de découpe additionnelle sont exécutées simultanément.

De préférence, l'étape de découpe et l'étape de découpe additionnelle sont exécutées successivement, par exemple ici l'étape de découpe est d'abord exécutée puis l'étape de découpe additionnelle.

Avantageusement, la découpe du vitrage est réalisée sans que la ou les feuilles de verre n'ait subie de refroidissement local dans la zone à découper, en variante un refroidissement local est réalisé sur au moins l'un ou les deux feuilles de verre du vitrage.

L'invention concerne également un vitrage feuilleté comportant au moins une découpe obtenue par le procédé selon l'invention grâce à quoi ledit vitrage comporte au moins un trou dans la première feuille de verre ou au moins un trou débouchant à travers la première feuille de verre et la deuxième feuille de verre qui est coaxial audit trou de l'insert.

Avantageusement, ladite découpe présente une rugosité inférieure à 3µm, préférentiellement inférieure à 2µm, encore plus préférentiellement inférieure à 1µm.

Par comparaison, la rugosité obtenue avec un perçage mécanique est généralement de l'ordre de 1,5 à 2 µm de sorte que la découpe au moyen d'une source laser permet de réduire considérablement les défauts microscopiques tels que les « écailles » qui participent à augmenter le risque de casse du verre, en particulier de fissures dans la zone du vitrage comportant la découpe.

Avantageusement, au moins l'une des feuilles de verre est renforcée thermiquement, de préférence la première feuille de verre et la deuxième feuille de verre sont renforcées thermiquement, préférentiellement le renforcement thermique est du type semi-trempe ou durcissement, ou encore un recuit (ou « annealeci » en anglais).

En effet, le renforcement thermique d'au moins l'une des feuilles de verre du vitrage ou avantageusement des deux feuilles de verre est une opération réalisée préalablement à l'assemblage du vitrage feuilleté de sorte que, lors de la mise en oeuvre du procédé de découpe par laser selon l'invention, chaque feuille de verre présente une dureté déterminée par le renforcement thermique appliqué pour mettre les couches extérieures du verre en compression afin d'en améliorer la résistance mécanique.

De préférence, la première feuille de verre et la deuxième feuille de verre sont de même composition, notamment une composition du type sodocalcique, aluminosilicate, borosilicate. En variante, la première feuille de verre et la deuxième feuille de verre sont de composition différente.

Selon un exemple, la première feuille de verre et la deuxième feuille de verre sont de même épaisseur de manière à former un vitrage feuilleté symétrique et ladite épaisseur des feuilles de verre est comprise entre 0,7 mm et 3 mm, préférentiellement entre 1,1 mm et 2,6 mm.

Selon un autre exemple, la première feuille de verre et la deuxième feuille de verre ont une épaisseur différente de manière à former un vitrage feuilleté dissymétrique, la première feuille de verre présentant une épaisseur comprise entre 1,5 mm et 3,5 mm et la deuxième feuille de verre présentant une épaisseur comprise entre 0,4 mm et 2,6 mm, préférentiellement entre 0,7 mm et 1,6 mm.

De préférence, la première feuille de verre et la deuxième feuille de verre sont de même teinte, notamment un verre clair, un verre vert ou un verre foncé (ou gris). En variante, la première feuille de verre et la deuxième feuille de verre sont de teinte différente.

Selon d'autres caractéristiques, la présente demande divulgue également un système de traitement de données comprenant un processeur configuré pour mettre en oeuvre les du procédé selon l'invention.

La présente demande divulgue aussi un produit de type programme d'ordinateur, comprenant au moins une séquence d'instructions stockée et lisible par un processeur et qui, une fois lue par le processeur, provoque la réalisation des étapes du procédé selon l'invention.

La présente demande divulgue aussi un support lisible par un ordinateur comportant ledit produit de type programme d'ordinateur.

On décrira ci-après, à titre d'exemples non limitatifs, plusieurs formes d'exécution de la présente invention, en référence aux figures annexées sur lesquelles :
[fig.1] illustre schématiquement une vue en coupe d'un vitrage feuilleté, selon une première configuration, avant la mise en oeuvre du procédé de découpe selon l'invention ;
[fig.2] représente schématiquement une vue en coupe d'un vitrage feuilleté, selon une deuxième configuration, avant la mise en oeuvre du procédé de découpe selon l'invention ;
[fig.3] représente schématiquement une étape de détection d'un contour intérieur du trou d'un insert intégré au vitrage feuilleté, selon la première configuration, au moyen d'un système de vision, tel qu'une caméra, selon le procédé de la présente invention ;
[fig.4] illustre de manière schématique une étape de découpe, au moyen d'un dispositif comprenant une source laser, d'une feuille de verre du vitrage feuilleté en accord avec la première configuration, selon le procédé de la présente invention ;
[fig.5] représente schématiquement une vue en coupe du vitrage feuilleté, selon ladite première configuration, comportant une cavité obtenue par le procédé de découpe selon l'invention ;
[fig.6] représente schématiquement une étape de découpe du vitrage feuilleté, selon la première configuration, au moyen de deux dispositifs comprenant chacun une source laser ;
[fig.7] représente schématiquement un vitrage feuilleté, selon la première configuration, comportant un trou débouchant, obtenu par le procédé de découpe selon l'invention ;
[fig.8] illustre schématiquement une vue de côté d'un vitrage feuilleté latéral comportant deux trous de fixation, obtenus au moyen du procédé selon l'invention ;
[fig.9] représente schématiquement les étapes du procédé de découpe d'un vitrage feuilleté selon l'invention, à savoir au moins une étape de détection, une étape de calcul et une étape de découpe, voire une étape de découpe additionnelle (en pointillé).

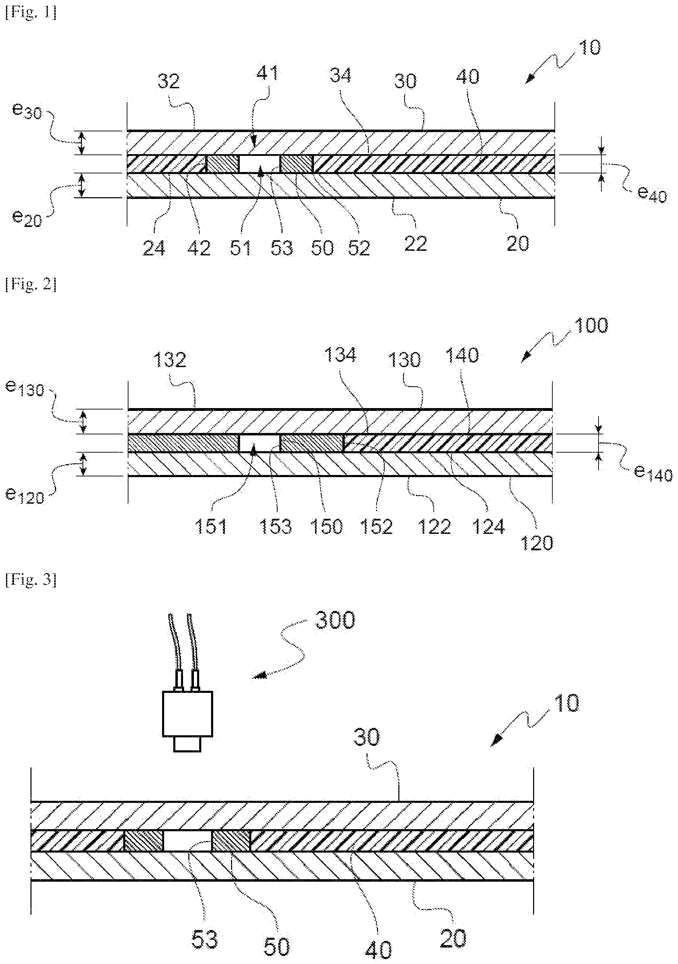

En référence à la [fig.1], il est illustré schématiquement, en vue de côté, un vitrage feuilleté 10, selon une première configuration, comportant une première feuille de verre 20, une deuxième feuille de verre 30 et un intercalaire 40.

Le vitrage 10 feuilleté selon l'invention sera décrit à titre d'exemple non limitatif dans le cadre d'une application comme vitrage latéral. En variante, le vitrages 10 feuilleté est un pare-brise, une lunette arrière ou un toit.

La première feuille de verre 20 comporte une face extérieure 22 et une face intérieure 24 et la deuxième feuille de verre 30 comporte une face extérieure 32 et une face intérieure 34.

De préférence, l'intercalaire 40 comprend une seule feuille en matériau polymère. De préférence, l'intercalaire 40 est une feuille en polyvinylbutyral (PVB). En variante, l'intercalaire 40 est une structure multicouche, c'est-à-dire constituée de plus d'une feuille.

L'intercalaire 40 comporte par exemple deux feuilles en matériau polymère telles qu'une première feuille et une deuxième feuille respectivement en polyvinylbutyral (PVB) dont l'une présente avantageusement des propriétés d'atténuation acoustique. Cette structure multicouche formant l'intercalaire 40 est encore appelée, selon le terme anglais, « bilayer ».

En variante, l'intercalaire 40 pourrait comporter plus de deux feuilles et par exemple être constitué de trois feuilles en matériau polymère, soit un « trilayer », comportant une feuille en polyethylene terephtalate (PET) disposée entre deux feuilles de polyvinylbutyral (PVB) dont l'une présente avantageusement des propriétés d'atténuation acoustique ou encore une feuille de polyvinylbutyral (PVB) qui, présentant avantageusement des propriétés d'atténuation acoustique, est disposée entre deux feuilles de polyvinylbutyral (PVB).

La première feuille de verre 20 et la deuxième feuille de verre 30 présentent une forme bombée, dans cette première configuration du vitrage 10 comme vitrage latéral. Alternativement, La première feuille de verre 20 et la deuxième feuille de verre 30 présentent une forme plane.

De préférence, les première et deuxième feuilles de verre 20, 30 sont renforcées thermiquement, notamment semi-trempées ou durcies. Dans une alternative, elles sont trempées chimiquement.

La première feuille de verre 20 et la deuxième feuille de verre 30 présentent, respectivement, une épaisseur e₂₀ et une épaisseur e₃₀.

De préférence, l'épaisseur e₂₀ et l'épaisseur e₃₀ sont sensiblement égales. Dans une alternative, l'épaisseur e₃₀ est inférieure à l'épaisseur e₃₀. Dans encore une autre alternative, l'épaisseur e₂₀ est supérieure à l'épaisseur e₃₀.

L'intercalaire 40 présente une épaisseur e₄₀, de préférence comprise entre 0,3 mm et 1,2 mm, et comporte un évidement 41, c'est-à-dire une découpe, présentant, de préférence, une forme cylindrique et un contour intérieur 42. Dans une alternative, l'évidement 41 présente une forme autre que cylindrique telle qu'une forme carrée, rectangulaire, ovale ou elliptique. L'évidement 41 est réalisé préalablement à l'assemblage du vitrage 10.

Le vitrage 10 comporte en outre un insert 50 qui est logé dans l'évidement 41 ménagé dans l'intercalaire 40, ledit évidement 41 présentant avantageusement une forme complémentaire de celle de l'insert 50.

De préférence, l'insert 50 est en contact direct avec la face intérieure 24 de la première feuille de verre 20 et avec la face intérieure 34 de la deuxième feuille de verre 30. L'insert 50 est ainsi interposé entre la première feuille de verre 20 et la deuxième feuille de verre 30.

L'insert 50 comporte au moins un trou 51. De préférence, le trou 51 est de forme cylindrique. Alternativement, le trou 51 présente une forme carrée, rectangulaire, ovale ou elliptique.

Dans encore une autre alternative, le trou 51 présente une première forme cylindrique présentant un premier diamètre et une seconde forme cylindrique présentant un second diamètre, le premier diamètre étant supérieur au second diamètre.

Ainsi, le trou 51 n'est pas limité aux diverses formes mentionnées, mais, au contraire, à toutes les formes que l'on peut obtenir au moyen d'un dispositif équipé d'une source laser, non décrites de manière exhaustive dans la présente description.

L'insert 50 présente un contour extérieur 52 et un contour intérieur 53, ledit contour intérieur 53 déterminé par le trou 51 de l'insert. Ainsi, le contour intérieur 53 présente une forme correspondant à celle du trou 51, soit ici circulaire.

L'insert 50 présente une dureté supérieure à celle de l'intercalaire 40, ledit matériau de l'insert présentant par exemple une dureté Shore D comprise entre 70 et 90.

Tel qu'illustré sur la [fig.1], l'insert 50 présente une forme annulaire, par exemple ici une forme de rondelle ou d'anneau plat.

De préférence, l'insert 50 présente un diamètre extérieur compris entre 10 mm et 30 mm, voire entre 15 mm et 25 mm.

L'insert 50 présente une épaisseur qui est égale à plus ou moins 10% de l'épaisseur de l'intercalaire 40, préférentiellement égale à plus ou moins 5% de l'épaisseur de l'intercalaire 40 et encore plus préférentiellement à plus ou moins 2% de l'épaisseur de l'intercalaire 40.

Le contour intérieur 42 de l'évidement 41 et le contour extérieur 52 de l'insert 50 sont avantageusement complémentaires de sorte que au moins une partie, ici la totalité, de l'insert 50 soit en contact avec l'intercalaire 40.

Grâce à l'évidement 41 dans l'intercalaire 40, il n'y a de matériau polymère qu'autour de l'insert 50, suivant son contour intérieur 42, mais pas au niveau du trou 51 de l'insert 50.

Avantageusement, l'insert 50 est susceptible de former une entretoise apte à limiter le fluage du matériau polymère de l'intercalaire 40, notamment lors de l'assemblage du vitrage 10 qui est généralement réalisé en autoclave à une température d'environ 140°C, ou ultérieurement en raison des efforts de serrage appliqués par des moyens de fixation.

En revanche, le matériau de l'insert 50 est sélectionné de manière à ce qu'il ne flue pas à une température inférieure à 140°C.

Avantageusement, l'insert 50 est réalisé dans un matériau plastique, notamment en polyamide (PA), par exemple du PA 6-6, en polyoxyméthylène (POM), également appelé polyformaldéhyde ou polyacétal, en polybutylène téréphtalate (PBT) ou en polyéthylène téréphtalate (PE).

De préférence, l'intercalaire 40 et l'insert 50 sont deux éléments distincts, indépendants l'un de l'autre. Dans une alternative, l'insert 50 est relié dans l'intercalaire 40, par exemple au moyen d'une bande adhésive ou tout autre moyen équivalent, de sorte que l'insert 50 et l'intercalaire 40 forment un ensemble unitaire grâce à quoi la mise en place entre la première feuille de verre 20 et la deuxième feuille de verre 30 lors de l'assemblage s'en trouve facilité.

En référence dorénavant à la [fig.2], il est illustré schématiquement, en vue de côté, un vitrage feuilleté 100, selon une deuxième configuration, comportant une première feuille de verre 120, une deuxième feuille de verre 130 et un intercalaire 140.

La deuxième configuration du vitrage feuilleté 100 selon la [fig.2] sera avantageusement décrite ci-après par comparaison avec le vitrage feuilleté 10 selon la première configuration illustrée à la [fig.1] de sorte que les variantes de réalisation et autres exemples notamment décrits précédemment s'appliquent mutatis mutandis au vitrage feuilleté 100.

La première feuille de verre 120 comporte une face extérieure 122 et une face intérieure 124 et la deuxième feuille de verre 130 comporte une face extérieure 132 et une face intérieure 134.

De préférence, l'intercalaire 140 comprend une seule feuille en matériau polymère tel qu'une feuille en polyvinylbutyral. En variante, l'intercalaire 140 est une structure multicouche, c'est-à-dire constituée de plus d'une feuille, notamment deux feuilles (« bilayer ») ou encore trois feuilles (« trilayer ») tels que décrit précédemment pour le vitrage feuilleté 10.

La première feuille de verre 120 et la deuxième feuille de verre 130 du vitrage feuilleté 100 présentent une forme bombée, ledit vitrage feuilleté 100 formant un vitrage latéral à l'instar du vitrage feuilleté 10 selon la première configuration.

Alternativement, la première feuille de verre 120 et la deuxième feuille de verre 130 présentent une forme plane. De préférence, les première et deuxième feuilles de verre 120, 130 sont renforcées thermiquement, notamment semi-trempées ou durcies. Dans une alternative, elles sont trempées chimiquement.

Les première et deuxième feuilles de verre 120, 130 présentent, respectivement, une épaisseur e₁₂₀ et une épaisseur e₁₃₀. De préférence, l'épaisseur e₁₂₀ et l'épaisseur e₁₃₀ sont sensiblement égales.

Dans une alternative, l'épaisseur e₁₂₀ est inférieure à l'épaisseur e₁₃₀.

Dans encore une autre alternative, l'épaisseur e₁₂₀ est supérieure à l'épaisseur e₁₃₀. L'intercalaire 140 présente une épaisseur e₁₄₀, de préférence comprise entre 0,3 mm et 1,2 mm.

Le vitrage 100 comporte en outre un insert 150, logé dans un évidement ménagé dans l'intercalaire 140 et présentant avantageusement une forme complémentaire.

L'insert 150 comporte au moins un trou 151. L'insert 150 présente un contour extérieur 152 et un contour intérieur 153 délimitant ledit trou 151.

Dans cette deuxième configuration, l'insert 150 est en contact avec l'intercalaire 140 sur seulement une partie de son contour extérieur 152.

Contrairement à la première configuration dans laquelle l'évidement 41 était une forme fermée à l'intérieur de laquelle se logeait l'insert 50, l'évidement ménagé dans l'intercalaire 140 est ici une forme ouverte en direction de l'extrémité des feuilles de verre 120, 130.

Ainsi et tel qu'illustré sur la [fig.2], une portion de l'insert 150 (qui n'est pas en contact avec l'intercalaire 140) est en affleurement avec les première et deuxième feuilles de verre 120, 130.

L'insert 150 présente globalement une forme de plaque dont le pourtour extérieur 152 peut présenter différentes formes géométriques, par exemple une forme carrée ou rectangulaire, préférentiellement une forme trapézoïdale.

De préférence, le trou 151 est de forme cylindrique. Alternativement, le trou 151 présente toute autre forme géométrique telle qu'une forme carrée, rectangulaire, ovale ou elliptique. Ainsi, le trou 151 n'est pas limité aux diverses formes mentionnées, mais, au contraire, à toutes les formes que l'on peut obtenir au moyen d'un dispositif équipé d'une source laser, non décrites de manière exhaustive dans la présente description.

L'insert 150 présente une dureté supérieure à celle de l'intercalaire 140, ledit matériau de l'insert présentant par exemple une dureté Shore D comprise entre 70 et 90.

L'insert 150 présente une épaisseur qui est égale à plus ou moins 10% de l'épaisseur de l'intercalaire 140, préférentiellement égale à plus ou moins 5% de l'épaisseur de l'intercalaire 140 et encore plus préférentiellement à plus ou moins 2% de l'épaisseur de l'intercalaire 140.

Avantageusement, l'insert 150 est susceptible de former une entretoise apte à limiter le fluage du matériau polymère de l'intercalaire 140, notamment lors de l'assemblage du vitrage 100 ou ultérieurement en raison des efforts de serrage appliqués par des moyens de fixation.

Avantageusement, l'insert 150 est réalisé dans un matériau plastique, tel que ceux décrit précédemment pour l'insert 50.

De préférence, l'insert 150 et l'intercalaire 140 sont distincts. Dans une alternative, l'insert 150 est solidaire de l'intercalaire 140, c'est-à-dire que l'insert 150 et l'intercalaire 140 forment un ensemble unitaire.

La demande internationale PCT/FR2021/050485 (non publiée) déposée sous priorité de la demande française FR2002921 du 25.03.2020 décrit et représente d'autres modes de réalisation de vitrage feuilleté comportant un tel insert et d'autres avantages de sorte que l'on s'y reportera avantageusement pour de plus amples détails.

Dans la description du procédé selon l'invention qui suit, il est fait référence au vitrage feuilleté 10, selon la première configuration, illustré sur la [fig.1]. La description du procédé est également valable pour le vitrage feuilleté 100, selon la deuxième configuration illustrée sur la [fig.2].

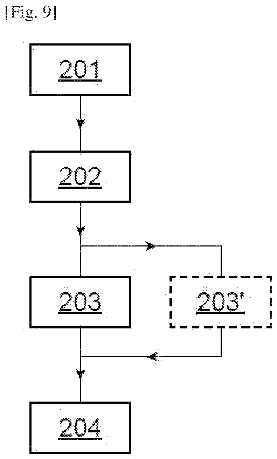

On a représenté de manière schématique sur la [fig.9] les différentes étapes du procédé de découpe selon l'invention, les pointillés correspondant à une étape optionnelle.

En référence à la [fig.3], il est illustré de manière schématique une première étape du procédé selon l'invention, à savoir une étape de détection 201. Lors de cette étape, un dispositif de vision 300 examine le vitrage 10 afin de détecter le contour intérieur 53 du trou 51 de l'insert 50, ici illustrée à travers la deuxième feuille de verre 30, de préférence à travers la première feuille de verre 20 dans la description qui suit. Bien entendu, l'étape de détection 201 peut être réalisée indifféremment à travers l'une et/ou l'autre desdites feuilles de verre 20, 30.

De préférence, le dispositif de vision 300 est une caméra « intelligente » équipée d'une électronique permettant d'acquérir, stocker et traiter des images. Une telle caméra est connue dans le domaine de la vision industrielle. Elle est dénommée « intelligente » car il est regroupé en son sein les fonctions habituelles d'un ordinateur, en revanche d'une manière plus compacte. Elle comporte, notamment, un capteur numérique de type CCD ou CMOS, un processeur et une mémoire.

De préférence, le dispositif de vision 300 communique, notamment, avec un organe de manipulation tel qu'un bras manipulateur robotisé (non visible). Alternativement, le dispositif de vision 300 comprend un système de visée laser ou un système émetteur-récepteur optique avec réflecteur. Ces systèmes sont également connus.

Le dispositif de vision 300 détecte le contour intérieur 53 du trou 51 de l'insert 50. Lors d'une deuxième étape du procédé selon l'invention, à savoir une étape de calcul 202, on détermine grâce à l'image acquise lors de l'étape de détection 201, le trajet à parcourir pour découper la feuille de verre 20, 30. Le dispositif de vision 300 transmet à l'organe de manipulation (non visible) d'une source laser 401 le contour intérieur 53 du trou 51 de l'insert 50, et par conséquent le trajet à parcourir par l'organe de manipulation lors d'une étape subséquente.

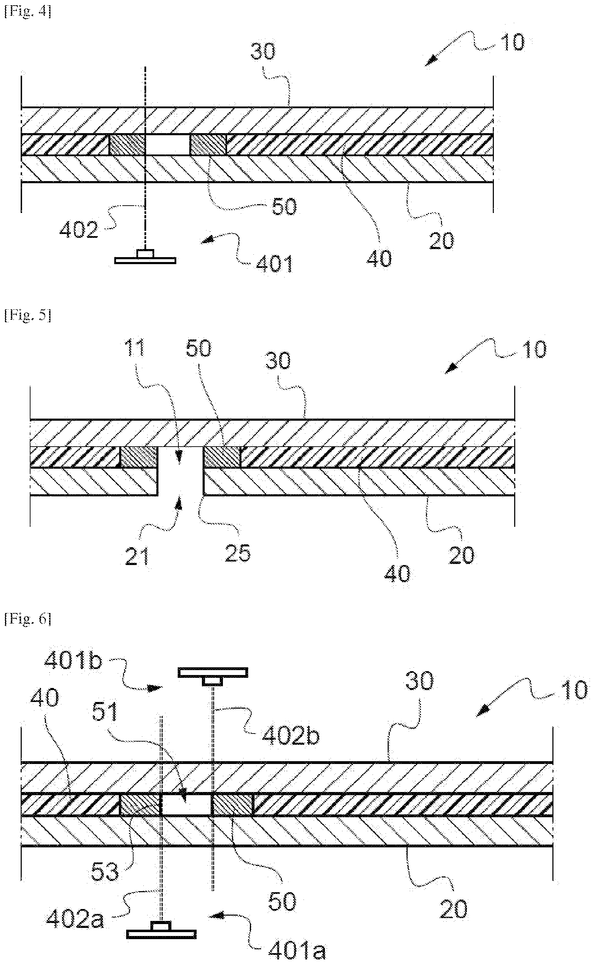

Lors d'une troisième étape du procédé selon l'invention, à savoir une étape de découpe 203, on met en oeuvre la source laser 401 émettant un faisceau 402, comme illustré sur la [fig.4]. De préférence, la source laser 401 est manipulée par le bras manipulateur robotisé (non visible).

De préférence, la source laser 401 est un laser nanoseconde présentant une longueur de 532 nm, une période de pulsation comprise entre 10 ns et 20 ns, une fréquence de 60 kHz et une puissance de 12W. Alternativement, la source laser 401 est un laser pi-coseconde ou un laser femtoseconde.

Dans l'étape de découpe 203, la première feuille de verre 20 est découpée selon le trajet calculé lors de l'étape de calcul 202. Suite à l'étape de découpe 203, la première feuille de verre 20 comporte alors un trou 21, comme illustré sur la [fig.5], et un débris de verre est produit.

Avantageusement, le trou 21 obtenu par découpe laser présente une rugosité inférieure à 3 µm, préférentiellement inférieure à 2 µm, encore plus préférentiellement inférieure à 1 µm.

Avantageusement, le trajet calculé lors de l'étape de calcul 202 prend en compte un retrait par rapport au contour intérieur 53 du trou 51 de l'insert 50 de sorte que le faisceau 402 émis par la source laser 401 n'atteigne pas l'insert 50.

De préférence, ce retrait est compris entre 0,1 mm et 1 mm, voire entre 0,5 mm et 1 mm. Ainsi, seule la première feuille de verre 20 est découpée.

Optionnellement, on réalise un chanfrein avec la source laser 401 lors d'une étape de finition 204, sur le bord 25 du trou 21 de manière à supprimer l'arête vive ou réaliser un cône pour faciliter par la suite l'introduction d'un élément tel qu'un capteur.

En appliquant le procédé, selon l'invention, jusqu'à l'étape de découpe 203, voire jusqu'à l'étape de finition 204, on réalise uniquement une découpe formant une cavité 11 dans le vitrage 10 de manière à accueillir un dispositif tel qu'un capteur (par exemple un capteur capacitif ou un capteur IR), ou un diffuseur de lumière ou encore un lidar.

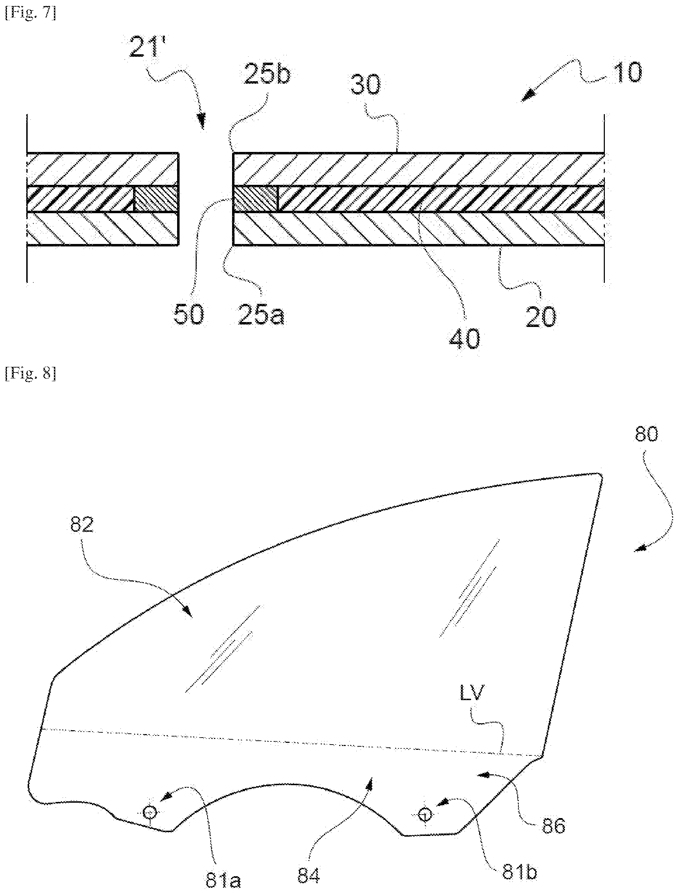

Lorsque l'on souhaite obtenir un vitrage 10 comportant un trou débouchant 21', comme illustré sur la [fig.7], l'étape de découpe 203 est modifiée.

Dans l'étape de découpe 203 modifiée, on met en oeuvre la source laser 401 émettant un faisceau 402, présentant les mêmes caractéristiques que dans l'étape de découpe 203.

On découpe d'abord la première feuille de verre 20 selon le trajet calculé lors de l'étape de calcul 202, puis le faisceau 402 est refocalisé pendant, par exemple, quelques dixièmes de secondes, puis on découpe la deuxième feuille de verre 30 selon le trajet calculé lors de l'étape de calcul 202.

De préférence, la source laser 401 reste du côté de la première feuille de verre 20 durant l'étape de découpe 203 modifiée. Optionnellement, on réalise un chanfrein avec la source laser 401 lors d'une étape de finition 204, sur les bords 25a, 25b du trou 21' de manière à supprimer l'arête vive ou réaliser un cône pour faciliter par la suite l'introduction d'un élément.

Alternativement, lorsque l'on souhaite obtenir un vitrage 10 comportant un trou débouchant 21', comme illustré sur la [fig.7], le procédé, selon l'invention, comporte une étape de découpe 203' additionnelle.

Dans l'étape de découpe 203' additionnelle, comme illustré sur la [fig.6], on applique l'étape de découpe 203 en mettant en oeuvre une première source laser 401a émettant un faisceau 402a, présentant les mêmes caractéristiques que précédemment mentionnées pour l'étape de découpe 203, disposée du côté de la première feuille de verre 20 et une seconde source laser 401b émettant un faisceau 402b, présentant les mêmes caractéristiques que pour l'étape de découpe 203 précédemment mentionnées, disposée du côté de la deuxième feuille de verre 30.

De préférence, la première source laser 401a et la seconde source laser 401b sont activées simultanément de manière à réduire le temps de découpe. Alternativement, soit la première source laser 401a est activée en premier puis on active ensuite la seconde source laser 401b, soit la seconde source laser 401b est activée en premier puis on active ensuite la première source laser 401a.

Optionnellement, lors de l'étape de finition 204, on réalise un chanfrein avec la source laser 401a sur le bord 25a du trou 21' et un autre chanfrein avec la source laser 401b sur le bord 25b trou 21' de manière à supprimer les arêtes vives ou réaliser des cônes pour faciliter par la suite l'introduction d'éléments.

Le procédé, selon l'invention, permet d'obtenir un défaut d'alignement extrêmement faible voire nul entre le trou présent dans la première feuille de verre 20, le trou présent dans la deuxième feuille de verre 30 et le trou 51 de l'insert 50.

Avantageusement, le vitrage feuilleté 10, 100 comporte un trou 21 dans la première feuille de verre 20, 120 ou un trou débouchant 21' à travers la première feuille de verre 20, 120 et la deuxième feuille de verre 30, 130 qui est coaxial audit trou 51, 151 de l'insert 50, 150.

Ainsi, l'axe d'un moyen de fixation traversant le vitrage 10 ne détériore pas les feuilles de verre du fait d'une meilleure réparation des efforts. Un tel vitrage 10 présente une robustesse accrue comparé à un vitrage feuilleté présentant des défauts d'alignement au niveau des trous de fixation.

Lors de l'étape de découpe, un débris de verre est formé. Il est avantageusement évacué, par exemple, par gravité ou par dépression.

Le procédé selon l'invention peut être mis en oeuvre par un système de traitements de données, tel qu'un ordinateur intégré au dispositif de vision 300.

Par ailleurs, l'invention peut mettre en oeuvre un algorithme, également dénommé produit de type programme d'ordinateur, comprenant une séquence d'instructions stockée et lisible par un processeur, par exemple celui de l'ordinateur intégré au dispositif de vision 300, et qui, une fois lue par le processeur, provoque la réalisation des étapes du procédé selon l'invention.

Un support lisible par un ordinateur, par exemple l'ordinateur intégré au dispositif de vision 300, peut comporter l'algorithme.

En référence maintenant à la [fig.8], il est illustré schématiquement un vitrage feuilleté 80, formant la vitre latérale d'un véhicule automobile, comportant un premier trou 81a et un deuxième trou 81b obtenus au moyen du procédé selon l'invention.

Le vitrage 80 feuilleté comporte une zone 82, dite visible, et une zone 84, dite non visible, qui s'étendent de part et d'autre d'une limite LV de visibilité du vitrage, la zone 84 non visible correspondant à une partie inférieure du vitrage dissimulée en permanence dans la portière.

On a représenté la limite LV de visibilité en pointillés afin de la matérialiser. La limite LV de visibilité correspond généralement à un joint lécheur monté solidaire de la portière, ledit joint lécheur étant agencé pour coopérer avec le vitrage 80 feuilleté, en particulier lorsque ledit vitrage 80 coulisse relativement à la portière.

Le vitrage 80 feuilleté comporte, dans ladite zone 84 non visible située en dessous de la limite LV de visibilité, au moins une partie 86 de fixation comportant le premier trou 81a de fixation et le deuxième trou 81b de fixation destinés à recevoir des moyens de fixation du vitrage 80 avec un dispositif d'entraînement (non représenté) dudit vitrage 80.

Les moyens de fixation entre le vitrage 80 et le dispositif d'entraînement comportent par exemple un premier axe et un deuxième axe destinés à traverser la partie 86 de fixation du vitrage 80 par, respectivement, le premier trou 81a de fixation et le deuxième trou 81b de fixation. Les moyens de fixation associés au vitrage 80 sont par exemple des moyens de fixation avec vissage.

De manière connue, de tels moyens de fixation sont configurés pour être rendus solidaires du vitrage 80, appliquant transversalement du fait du vissage des efforts de serrage sur chacune des parties 86 de fixation.

Le dispositif d'entraînement (parfois appelé « lève-vitre ») est commandé sélectivement pour déplacer, suivant un mouvement de translation, ledit vitrage 80 en hauteur entre au moins une position haute, dite de fermeture, de la baie de la portière et une position basse, dite d'ouverture de tout ou partie de ladite baie.

Le vitrage 80 feuilleté comporte au moins une feuille de verre extérieure et une feuille de verre intérieure qui sont assemblées par l'intermédiaire d'un intercalaire. Le vitrage 80 feuilleté utilisé ici comme vitrage latéral est délimité par un pourtour de forme globalement parallélépipédique.

La feuille de verre extérieure comporte une face extérieure et une face intérieure, respectivement orientées vers l'espace extérieur du véhicule et vers l'espace intérieur du véhicule.

Tel qu'illustré sur la [fig.8], la feuille de verre extérieure comporte successivement un bord supérieur, un bord arrière, un bord inférieur et un bord avant, lesdits bord supérieur et bord inférieur opposés s'étendant globalement selon l'orientation longitudinale et lesdits bord arrière et bord avant opposés s'étendant globalement selon l'orientation verticale.

Selon le type du vitrage 80 feuilleté, symétrique ou asymétrique, ladite au moins une partie 86 de fixation est susceptible d'être notamment constituée par tout ou une partie seulement des feuilles constituant ledit vitrage 80.

La feuille de verre intérieure comporte une face extérieure et une face intérieure, respectivement orientées vers l'espace extérieur du véhicule et vers l'espace intérieur du véhicule.

Dans un tel vitrage feuilleté 10, 100 ou 80, au moins l'une des feuilles de verre 20, 120, 30, 130 est avantageusement renforcée thermiquement.

De préférence, la première feuille de verre 20, 120 et la deuxième feuille de verre 30, 130 sont renforcées thermiquement, préférentiellement le renforcement thermique est du type semi-trempe ou durcissement.

De préférence, la première feuille de verre 20, 120 et la deuxième feuille de verre 30, 130 sont de même composition, notamment une composition du type sodocalcique, aluminosilicate, borosilicate.

En variante, la première feuille de verre 20, 120 et la deuxième feuille de verre 30, 130 sont de composition différente.

Selon les applications et le type de vitrage feuilleté, la première feuille de verre 20, 120 et la deuxième feuille de verre 30, 130 sont de même épaisseur, respectivement notée e20, e120, e30, e130 pour la première et la deuxième configuration décrire précédemment, de manière à former un vitrage feuilleté symétrique.

De préférence, dans un tel vitrage symétrique, ladite épaisseur des feuilles de verre 20, 120, 30, 130 est comprise entre 0,7 mm et 3 mm, préférentiellement entre 1,1 mm et 2,6 mm.

La première feuille de verre 20, 120 et la deuxième feuille de verre 30, 130 ont une épaisseur différente de manière à former un vitrage feuilleté dissymétrique, la première feuille de verre 20, 120 présentant une épaisseur e20, e120 comprise entre 1,5 mm et 3,5 mm et la deuxième feuille de verre 30, 130 présentant une épaisseur e30, e130 comprise entre 0,4 mm et 2,6 mm, préférentiellement entre 0,7 mm et 1,6 mm.

De préférence, la première feuille de verre 20, 120 et la deuxième feuille de verre 30, 130 sont de même teinte, notamment un verre clair, un verre vert ou un verre foncé (ou gris).

En variante, la première feuille de verre 20, 120 et la deuxième feuille de verre 30, 130 sont de teinte différente.

Le procédé selon l'invention s'applique également à des vitrages asymétriques pour lesquels on découpe une seule feuille de verre. L'invention n'est pas limitée à l'application du procédé à une vitre latérale, mais peut être également appliquée, par exemple, à un toit ou une lunette arrière pour véhicule automobile ou à un vitrage feuilleté destiné à des domaines autres que l'automobile.

## Revendications

1. Procédé de découpe d'un vitrage (10, 80, 100) feuilleté, notamment pour un véhicule automobile, comportant au moins une première feuille de verre (20, 120), une deuxième feuille de verre (30, 130) assemblées par un intercalaire (40, 140) comportant au moins une feuille en matériau polymère, **caractérisé en ce que** ledit vitrage (10, 80, 100) comporte en outre un insert (50, 150) présentant un trou (51, 151) délimité par un contour intérieur (53, 153), ledit insert (50, 150) étant logé dans un évidement (41) ménagé dans ledit intercalaire (40, 140), ledit procédé comportant les étapes suivantes :
- une étape de détection (201) au moyen d'un dispositif de vision (300) dudit contour intérieur (53, 153) ;
- une étape de calcul (202) d'un trajet de découpe à parcourir en fonction de la détection dudit contour intérieur (53, 153) ;
- une étape de découpe (203) d'au moins ladite première feuille de verre (20, 120), en fonction dudit trajet de découpe calculé, au moyen d'une source laser (401, 401a) présentant un faisceau (402, 402a).

2. Procédé selon la revendication 1 **caractérisé en ce que**, lors de l'étape de calcul (202), on calcule un retrait par rapport audit contour intérieur (53, 153) compris entre 0,1 mm et 1 mm, voire entre 0,5 mm et 1 mm de sorte que ledit faisceau (402, 402b) n'atteigne pas l'insert (50, 150) lors de l'étape de découpe (203).

3. Procédé selon l'une quelconque des revendications 1 à 2 **caractérisé en ce que** ledit procédé comporte en outre :
- une étape de chanfreinage (204) au moyen de ladite source laser (401) consistant à réaliser au moins un chanfrein sur un bord (25) d'un trou (21) de ladite première feuille de verre (20, 120) résultant de l'étape de découpe (203).

4. Procédé selon l'une quelconque des revendications 1 à 3 **caractérisé en ce que** lors de l'étape de découpe (203) ladite seconde feuille de verre (30, 130) est également découpée en fonction dudit trajet de découpe calculé au moyen de ladite source laser (401).

5. Procédé selon la revendication 3 **caractérisé en ce que** ledit procédé comporte en outre :
- une étape de chanfreinage (204) au moyen de ladite source laser (401) d'au moins un chanfrein sur un bord (25a) de ladite première feuille de verre (20, 120) et/ou sur un bord (25b) de ladite seconde feuille de verre (30, 130) d'un trou (21') débouchant résultant de l'étape de découpe (203).

6. Procédé selon l'une quelconque des revendications 1 à 3 **caractérisé en ce que** le procédé comporte en outre :
- une étape de découpe additionnelle (203') de ladite deuxième feuille de verre (30, 130) au moyen d'une source laser additionnelle (401b) présentant un faisceau (402b) en fonction dudit trajet de découpe calculé.

7. Procédé selon la revendication 6 **caractérisé en ce que** l'étape de découpe (203) et l'étape de découpe additionnelle (203') sont exécutées simultanément.

8. Procédé selon la revendication 6 **caractérisé en ce que** l'étape de découpe (203) et l'étape de découpe additionnelle (203') sont exécutées successivement.

9. Vitrage feuilleté (10, 80, 100) comportant au moins une découpe obtenue par le procédé selon l'une quelconque des revendications 1 à 8 grâce à quoi ledit vitrage (10, 80, 100) comporte un trou (21) dans la première feuille de verre (20, 120) ou un trou débouchant (21') à travers la première feuille de verre (20, 120) et la deuxième feuille de verre (30, 130) qui est coaxial audit trou (51, 151) de l'insert (50, 150).

10. Vitrage feuilleté (10, 80, 100) selon la revendication 9, **caractérisé en ce que** ladite découpe présente une rugosité inférieure à 3µm, préférentiellement inférieure à 2µm, encore plus préférentiellement inférieure à 1µm.

11. Vitrage feuilleté (10, 80, 100) selon la revendication 9, **caractérisé en ce qu'**au moins l'une des feuilles de verre est renforcée thermiquement, de préférence la première feuille de verre (20, 120) et la deuxième feuille de verre (30, 130) sont renforcées thermiquement, préférentiellement le renforcement thermique est du type semi-trempe ou durcissement.

12. Vitrage feuilleté (10, 80, 100) selon la revendication 9, **caractérisé en ce que** la première feuille de verre (20, 120) et la deuxième feuille de verre (30, 130) sont de même composition, notamment une composition du type sodocalcique, aluminosilicate, borosilicate, ou la première feuille de verre (20, 120) et la deuxième feuille de verre (30, 130) sont de composition différente.

13. Vitrage feuilleté (10, 80, 100) selon la revendication 9, **caractérisé en ce que** la première feuille de verre (20, 120) et la deuxième feuille de verre (30, 130) sont de même épaisseur (e₂₀, e₁₂₀, e₃₀, e₁₃₀) de manière à former un vitrage feuilleté symétrique et **en ce que** ladite épaisseur des feuilles de verre est comprise entre 0,7 mm et 3 mm, préférentiellement entre 1,1 mm et 2,6 mm.

14. Vitrage feuilleté (10, 80, 100) selon la revendication 9, **caractérisé en ce que** la première feuille de verre (20, 120) et la deuxième feuille de verre (30, 130) ont une épaisseur différente de manière à former un vitrage feuilleté dissymétrique, la première feuille de verre (20, 120) présentant une épaisseur (e₂₀, e₁₂₀) comprise entre 1,5 mm et 3,5 mm et la deuxième feuille de verre (30, 130) présentant une épaisseur (e₃₀, e₁₃₀) comprise entre 0,4 mm et 2,6 mm, préférentiellement entre 0,7 mm et 1,6 mm.

15. Vitrage feuilleté (10, 80, 100) selon la revendication 9, **caractérisé en ce que** la première feuille de verre (20, 120) et la deuxième feuille de verre (30, 130) sont de même teinte, notamment un verre clair, un verre vert ou un verre foncé ou gris, ou la première feuille de verre (20, 120) et la deuxième feuille de verre (30, 130) sont de teinte différente.

## Patentansprüche

1. Verfahren zum Schneiden einer Verbundverglasung (10, 80, 100), insbesondere für ein Kraftfahrzeug, umfassend mindestens eine erste Glasscheibe (20, 120) und eine zweite Glasscheibe (30, 130), die durch eine Zwischenlage (40, 140) zusammengefügt sind, umfassend mindestens eine Scheibe aus Polymermaterial, **dadurch gekennzeichnet, dass** die Verglasung (10, 80, 100) ferner einen Einsatz (50, 150) umfasst, der ein Loch (51, 151) aufweist, das durch eine Innenkontur (53, 153) begrenzt ist, wobei der Einsatz (50, 150) in einer in der Zwischenlage gebildeten Aussparung (41) untergebracht ist (40, 140), wobei das Verfahren die folgenden Schritte beinhaltet:
- einen Schritt des Erkennens (201) der Innenkontur (53, 153) mittels einer Sichtvorrichtung (300);
- einen Schritt des Berechnens (202) eines zurückzulegenden Schneidwegs basierend auf der Erkennung der Innenkontur (53, 153);
- einen Schritt des Schneidens (203) mindestens der ersten Glasscheibe (20, 120) basierend auf dem berechneten Schneidweg mittels einer Laserquelle (401, 401a), die einen Strahl (402, 402a) aufweist.

2. Verfahren nach Anspruch 1, **dadurch gekennzeichnet, dass** während des Schritt des Berechnens (202) eine Entfernung in Bezug auf die Innenkontur (53, 153) zwischen 0,1 mm und 1 mm, sogar zwischen 0,5 mm und 1 mm berechnet wird, sodass der Strahl (402, 402b) während des Schneidschritts (203) an dem Einsatz (50, 150) vorbeigeht.

3. Verfahren nach einem der Ansprüche 1 bis 2,
**dadurch gekennzeichnet, dass** das Verfahren ferner beinhaltet:
- einen Schritt des Anfasens (204) mittels der Laserquelle (401), der darin besteht, mindestens eine Anfasung an einer Kante (25) eines Lochs (21) der ersten Glasscheibe (20, 120) vorzunehmen, das aus dem Schneidschritt (203) resultiert.

4. Verfahren nach einem der Ansprüche 1 bis 3,
**dadurch gekennzeichnet, dass** während des Schritts des Schneidens (203) die zweite Glasscheibe (30, 130) ebenfalls basierend auf dem berechneten Schneidweg mittels der Laserquelle (401) geschnitten wird.

5. Verfahren nach Anspruch 3, **dadurch gekennzeichnet, dass** das Verfahren ferner beinhaltet:
- einen Schritt des Anfasens (204) mindestens einer Anfasung an einer Kante (25a) der ersten Glasscheibe (20, 120) und/oder an einer Kante (25b) der zweiten Glasscheibe (30, 130) eines Durchgangslochs (21'), das aus dem Schneidschritt (203) resultiert, mittels der Laserquelle (401).

6. Verfahren nach einem der Ansprüche 1 bis 3,
**dadurch gekennzeichnet, dass** das Verfahren ferner beinhaltet:
- einen zusätzlichen Schritt des Schneidens (203') der zweiten Glasscheibe (30, 130) mittels einer zusätzlichen Laserquelle (401b), die einen Strahl (402b) aufweist, basierend auf dem berechneten Schneidweg.

7. Verfahren nach Anspruch 6, **dadurch gekennzeichnet, dass** der Schritt des Schneidens (203) und der zusätzliche Schritt des Schneidens (203') gleichzeitig ausgeführt werden.

8. Verfahren nach Anspruch 6, **dadurch gekennzeichnet, dass** der Schritt des Schneidens (203) und der zusätzliche Schritt des Schneidens (203') nacheinander ausgeführt werden.

9. Verbundverglasung (10, 80, 100), umfassend mindestens eine Ausnehmung, die durch das Verfahren nach einem der Ansprüche 1 bis 8 erhalten wurde, dank dessen die Verglasung (10, 80, 100) ein Loch (21) in der ersten Glasscheibe (20, 120) oder ein Durchgangsloch (21') durch die erste Glasscheibe (20, 120) und die zweite Glasscheibe (30, 130) hindurch umfasst, das koaxial zu dem Loch (51, 151) des Einsatzes (50, 150) ist.

10. Verbundverglasung (10, 80, 100) nach Anspruch 9,
**dadurch gekennzeichnet, dass** der Ausschnitt eine Rauheit von weniger als 3 µm, vorzugsweise weniger als 2 µm, noch mehr bevorzugt weniger als 1 µm aufweist.

11. Verbundverglasung (10, 80, 100) nach Anspruch 9,
**dadurch gekennzeichnet, dass** mindestens eine der Glasscheiben thermisch verstärkt ist, wobei vorzugsweise die erste Glasscheibe (20, 120) und die zweite Glasscheibe (30, 130) thermisch verstärkt sind, wobei es sich bei der thermischen Verstärkung vorzugsweise um Halbhärtung oder Aushärtung handelt.

12. Verbundverglasung (10, 80, 100) nach Anspruch 9,
**dadurch gekennzeichnet, dass** die erste Glasscheibe (20, 120) und die zweite Glasscheibe (30, 130) die gleiche Zusammensetzung aufweisen, insbesondere eine Natronkalk-, Alumosilikat-, Borosilikat-Zusammensetzung, oder wobei die erste Glasscheibe (20, 120) und die zweite Glasscheibe (30, 130) unterschiedliche Zusammensetzungen aufweisen.

13. Verbundverglasung (10, 80, 100) nach Anspruch 9,
**dadurch gekennzeichnet, dass** die erste Glasscheibe (20, 120) und die zweite Glasscheibe (30, 130) eine gleiche Dicke (e₂₀, e₁₂₀, e₃₀, e₁₃₀) derart aufweisen, dass sie eine symmetrische Verbundverglasung bilden und **dadurch, dass** die Dicke der Glasscheiben zwischen 0,7 mm und 3 mm, vorzugsweise zwischen 1,1 mm und 2,6 mm liegt.

14. Verbundverglasung (10, 80, 100) nach Anspruch 9,
**dadurch gekennzeichnet, dass** die erste Glasscheibe (20, 120) und die zweite Glasscheibe (30, 130) eine unterschiedliche Dicke derart aufweisen, dass sie eine asymmetrische Verbundverglasung bilden, wobei die erste Glasscheibe (20, 120) eine Dicke (e₂₀, e₁₂₀) zwischen 1,5 mm und 3,5 mm aufweist und die zweite Glasscheibe (30, 130) eine Dicke (e₃₀, e₁₃₀) zwischen 0,4 mm und 2,6 mm, vorzugsweise zwischen 0,7 mm und 1,6 mm, aufweist.

15. Verbundverglasung (10, 80, 100) nach Anspruch 9,
**dadurch gekennzeichnet, dass** die erste Glasscheibe (20, 120) und die zweite Glasscheibe (30, 130) den gleichen Farbton aufweisen, insbesondere ein Klarglas, ein Grünglas oder ein dunkles oder graues Glas, oder die erste Glasscheibe (20, 120) und die zweite Glasscheibe (30, 130) unterschiedliche Farbtöne aufweisen.

## Claims

1. A method for cutting a laminated glazing (10, 80, 100), particularly for a motor vehicle, comprising at least a first glass sheet (20, 120), a second glass sheet (30, 130) assembled by an interlayer (40, 140) comprising at least one sheet of polymer material, **characterized in that** said glazing (10, 80, 100) further comprises an insert (50, 150) having a hole (51, 151) delimited by an inner contour (53, 153), said insert (50, 150) being housed in a recess (41) provided in said interlayer (40, 140), said method comprising the following steps:
- a step of detecting (201) by means of a vision device (300) said inner contour (53, 153);
- a step of calculating (202) a cutting path to be traveled based on the detection of said inner contour (53, 153);
- a step of cutting (203) at least said first glass sheet (20, 120), based on said calculated cutting path, by means of a laser source (401, 401a) having a beam (402, 402a).

2. The method according to claim 1, **characterized in that**, during the calculation step (202), a shrinkage with respect to said inner contour (53, 153) between 0.1 mm and 1 mm, or even between 0.5 mm and 1 mm, is calculated so that said beam (402, 402b) does not reach the insert (50, 150) during the cutting step (203).

3. The method according to any one of claims 1 to 2, **characterized in that** said method further comprises:
- a chamfering step (204) by means of said laser source (401) consisting of chamfering at least one edge (25) of a hole (21) in said first glass sheet (20, 120) resulting from the cutting step (203).

4. The method according to any one of claims 1 to 4, **characterized in that** during the cutting step (203) said second glass sheet (30, 130) is also cut based on said calculated cutting path by means of said laser source (401).

5. The method according to claim 3, **characterized in that** said method further comprises:
- a step of chamfering (204), by means of said laser source (401), at least one chamfer on an edge (25a) of said first glass sheet (20, 120) and/or on an edge (25b) of said second glass sheet (30, 130) of a through-hole (21') resulting from the cutting step (203).

6. The method according to any one of claims 1 to 4, **characterized in that** the method further comprises:
- an additional cutting step (203') of said glass sheet (30,130) by means of an additional laser source (401b) having a beam (402b) based on said calculated cutting path.

7. The method according to claim 6 **characterized in that** the cutting step (203) and the additional cutting step (203') are executed simultaneously.

8. The method according to claim 6 **characterized in that** the cutting step (203) and the additional cutting step (203') are executed consecutively.

9. A laminated glazing (10, 80, 100) comprising at least one cut-out obtained by the method according to any one of claims 1 to 8 by virtue of which said glazing (10, 80, 100) comprises a hole (21) in the first glass sheet (20, 120) or a through-hole (21') in the first glass sheet (20, 120) and the second glass sheet (30, 130) which is coaxial to said hole (51, 151) of the insert (50, 150).

10. The laminated glazing (10, 80, 100) according to claim 9, **characterized in that** said cut-out has a roughness of less than 3 µm, preferentially less than 2 µm, even more preferentially less than 1 µm.

11. The laminated glazing (10, 80, 100) according to claim 9, **characterized in that** at least one of the glass sheets is thermally strengthened, preferably the first glass sheet (20, 120) and the second glass sheet (30, 130) are thermally strengthened, preferentially the thermal strengthening is of the semi-tempered or hardened type.

12. The laminated glazing (10, 80, 100) according to claim 9, **characterized in that** the first glass sheet (20, 120) and the second glass sheet (30, 130) are of the same composition, particularly a soda-lime, aluminosilicate, borosilicate-like composition, or the first glass sheet (20, 120) and the second glass sheet (30, 130) are of a different composition.

13. The laminated glazing (10, 80, 100) according to claim 9, **characterized in that** the first glass sheet (20, 120) and the second glass sheet (30, 130) are of the same thickness (e₂₀, e₁₂₀, e₃₀, e₁₃₀) so as to form a symmetrical laminated glazing and **in that** said thickness of the glass sheets is between 0.7 mm and 3 mm, preferentially between 1.1 mm and 2.6 mm.

14. The laminated glazing (10, 80, 100) according to claim 9, **characterized in that** the first glass sheet (20,120) and the second glass sheet (30, 130) have a different thickness so as to form an asymmetrical laminated glazing, the first glass sheet (20, 120) having a thickness (e₂₀, e₁₂₀) between 1.5 mm and 3.5 mm and the second glass sheet (30, 130) having a thickness (e₃₀, e₁₃₀) between 0.4 mm and 2.6 mm, preferentially between 0.7 mm and 1.6 mm.

15. The laminated glazing (10, 80, 100) according to claim 9, **characterized in that** the first glass sheet (20, 120) and the second glass sheet (30, 130) are of the same hue, particularly a clear glass, a green glass or a dark (or gray) glass, or the first glass sheet (20, 120) and the second glass sheet (30, 130) are of a different hue.
